# EUROPEAN PATENT SPECIFICATION

(11) **EP 4 395 019 B1**
(45) Date of publication and mention of the grant of the patent: **14.05.2025**
(21) Application number: 23173050.8
(22) Date of filing: 12.05.2023
(51) Int. Cl.: H01M 50/107, H01M 50/152, H01M 50/171, H01M 50/184, H01M 50/186, H01M 50/545, H01M 50/56

(54) **CYLINDRICAL BATTERY AND ELECTRONIC DEVICE**
ZYLINDRISCHE BATTERIE UND ELEKTRONISCHE VORRICHTUNG
BATTERIE CYLINDRIQUE ET DISPOSITIF ÉLECTRONIQUE

(30) Priority: 29.12.2022 CN 202223550269 U
(43) Date of publication of application: 03.07.2024
(73) Proprietor: AESC Japan Ltd., Kanagawa, 2520012 (JP)
(72) Inventor: XU, Yonggang, Wuxi City, Jiangsu Province 214443 (CN)
(74) Representative: Becker, Eberhard

(56) References cited:
- EP-A1- 4 080 654
- CN-A- 113 675 510
- CN-A- 114 899 556
- CN-A- 115 411 462
- CN-U- 215 578 778
- US-A1- 2021 175 568

## Description

### BACKGROUND

### Technical Field

The disclosure relates to the technical field of batteries, in particular to a cylindrical battery and an electronic device.

### Description of Related Art

Characterized in high energy density, high safety and low cost, cylindrical battery is now an important topic for research in the field of new energy power batteries. A cylindrical battery includes a housing, a cell, an electrode pole and a cover. The housing is a cylindrical structure with one end open. The housing includes an end wall and a surrounding wall enclosing the end wall. The cell is provided in the housing. The cover seals the open end of the housing. The first tab of the cell is welded to the housing through a connecting piece, and the electrode pole is fixed on the end wall of the housing and electrically connected with the second tab of the cell.

In the related art, the packaging process of the cylindrical battery is as follows: after the cell is loaded into the housing, one end of the housing away from the electrode pole is pier-sealed, and the connecting piece is welded and fixed to the surrounding wall of the housing to realize electrical connection between the tab and the housing. If the welding between the connecting piece and the housing is performed in the housing, the metal shavings generated during the welding process are very likely to fall within the cell, which will affect the safety of the cell; if the welding between the connecting piece and the housing is performed outside the housing, since the position where the housing and the connecting piece correspond each other is generally close to the position where the housing is pier-sealed, as the surrounding wall of the housing is stretched and thinned after the pier-sealing treatment, if penetration welding is performed outside the housing, it is likely to cause the surrounding wall of the housing to crack, and electrolyte leakage will occur consequently. US 2021/175568 A1, an example of prior art, which discloses a battery that includes a battery can cylindrical portion, a bottom wall closing one end of the cylindrical portion, and an open rim continuing to the other end of the cylindrical portion; an electrode body housed in the cylindrical portion, and a sealing body fixed to the open rim so as to seal an opening defined by the open rim.

In light of the above, it is an urgent issue to provide a cylindrical battery to solve the above problems.

### SUMMARY

A purpose of the present disclosure is to provide a cylindrical battery, which is able to avoid electrolyte leakage and improve the stability and safety of the cylindrical battery.

Another purpose of the present disclosure is to provide an electronic device, and the stability and safety of the electronic device may be improved by using the above-mentioned cylindrical battery.

In order to achieve the above purpose, the following technical solutions are provided:

In the first aspect, a cylindrical battery is provided, which includes: a housing, which includes an opening; a cell, which includes a cell body and a first tab, and the first tab is located at one end of the cell body; a cover, the cover is electrically connected to the first tab, and a protruding portion is provided on the cover; a sealing member, which covers the edge of the cover, the sealing member is provided with an avoidance hole for the protruding portion to protrude from, and the protruding portion on the cover is able to reach out through the avoidance hole on the sealing member to be in direct contact with the housing.

In an optional solution for the cylindrical battery, the sealing member includes a first wrapping portion and a second wrapping portion, the first wrapping portion covers the outer surface of the cover, and the second wrapping portion covers the inner surface of the cover.

In an optional solution for the cylindrical battery, a plurality of protruding portions are arranged on the outer surface of the cover at intervals along the circumferential direction of the cover, and a plurality of avoidance holes are arranged on the first wrapping portion of the sealing member at intervals along the circumferential direction of the sealing member.

In an optional solution for the cylindrical battery, a plurality of the protruding portions are arranged on the inner surface of the cover at intervals along the circumferential direction of the cover, and a plurality of the avoidance holes are arranged on the second wrapping portion of the sealing member at intervals along the circumferential direction of the sealing member.

In an optional solution for the cylindrical battery, a positioning pillar is provided on the sealing member, and a positioning hole through which the positioning pillar passes is provided on the cover.

In an optional solution for the cylindrical battery, the sealing member further includes a third wrapping portion, and the third wrapping portion is configured to connect the first wrapping portion and the second wrapping portion.

In an optional solution for the cylindrical battery, the protruding portion is provided on the peripheral side of the cover, and the avoidance hole is provided on the third wrapping portion of the sealing member.

In an optional solution for the cylindrical battery, a plurality of the protruding portions are arranged on the peripheral side of the cover at intervals along the circumferential direction of the cover, and a plurality of the avoidance holes are arranged on the third wrapping portion of the sealing member at intervals along the circumferential direction of the sealing member.

In an optional solution for the cylindrical battery, one end of the positioning pillar is connected to the first wrapping portion, and another end of the positioning pillar is spaced apart from the second wrapping portion.

In an optional solution for the cylindrical battery, one end of the positioning pillar is connected to the second wrapping portion, and another end of the positioning pillar is spaced apart from the first wrapping portion.

In an optional solution for the cylindrical battery, the first wrapping portion and the second wrapping portion are arranged at intervals, and a gap between the first wrapping portion and the second wrapping portion serves as the avoidance hole. Two ends of the positioning pillar are respectively connected to the first wrapping portion and the second wrapping portion. One of the protruding portions encloses the outer peripheral side of the cover, and the protruding portion passes through the avoidance hole.

In an optional solution for the cylindrical battery, the thickness of the protruding portion is greater than the thickness of the cover. In an optional solution for the cylindrical battery, the cylindrical battery further includes a first connecting piece, and the first connecting piece is configured to electrically connect the first tab and the cover.

In a second aspect, an electronic device is provided, which includes the above-mentioned cylindrical battery.

Compared with the related art, the advantageous effects of the present disclosure are as follows:

The cylindrical battery provided by the present disclosure includes a housing, a cell, a cover and a sealing member. The housing includes an end wall and a surrounding wall enclosing the end wall; the cell includes a cell body and a first tab, the cover is electrically connected to the first tab, and the cover is provided with a protruding portion. The sealing member is provided with an avoidance hole for the protruding portion to protrude from. The protruding portion on the cover is able to reach out through the avoidance hole on the sealing member to be in direct contact with the surrounding wall, thereby ensuring that the cover is electrically connected to the surrounding wall of the housing. In this way, it is possible to ensure the stability of the electrical connection between the cover and the housing without having to weld the cover and the housing. Also, the stability and safety of the cylindrical battery may be improved. In addition, the sealing member wraps the peripheral side of the cover to realize the sealing connection between the cover and the surrounding wall of the housing, and electrolyte leakage may be avoided.

The electronic device provided by the present disclosure is able to improve the stability and safety of the electronic device by using the above-mentioned cylindrical battery.

### BRIEF DESCRIPTION OF THE DRAWINGS

In order to more clearly illustrate the technical solutions in the embodiments of the present disclosure, the accompanying drawings that need to be used in the description of the embodiments of the present disclosure will be briefly described below. Clearly, the accompanying drawings in the following description are only some embodiments of the present disclosure. For those skilled in the art, other drawings can also be obtained according to the content of the embodiment and these drawings of the present disclosure without any inventive effort.
FIG. 1 is a schematic structural diagram of the first type of cylindrical battery provided in an embodiment of the present disclosure.
FIG. 2 is an enlarged view of position A in FIG. 1.
FIG. 3 is an exploded schematic diagram of a cover and a sealing member of the first type of cylindrical battery provided in an embodiment of the present disclosure.
FIG. 4 is a schematic structural diagram of the second type of cylindrical battery provided in an embodiment of the present disclosure.
FIG. 5 is an enlarged view of position B in FIG. 4.
FIG. 6 is an exploded schematic diagram of a cover and a sealing member of the second type of cylindrical battery provided in an embodiment of the present disclosure.
FIG. 7 is a schematic structural diagram of the third type of cylindrical battery provided in an embodiment of the present disclosure.
FIG. 8 is an enlarged view of position C in FIG. 7.
FIG. 9 is an exploded schematic diagram of a cover and a sealing member of the third type of cylindrical battery provided in an embodiment of the present disclosure.
FIG. 10 is a schematic structural diagram of the fourth type of cylindrical battery provided in an embodiment of the present disclosure.
FIG. 11 is an enlarged view of position D in FIG. 10.
FIG. 12 is an exploded schematic diagram of a cover and a sealing member of the fourth type of cylindrical battery provided in an embodiment of the present disclosure.

### DESCRIPTION OF THE EMBODIMENTS

In order to better describe the technical problem to be solved by the disclosure, the adopted technical solution and the achieved technical effect, the technical solution of the disclosure will be further described below in conjunction with the accompanying drawings and through specific implementation methods.

In the description of the present disclosure, unless otherwise clearly specified and limited, the terms "connected", "linked" and "fixed" should be understood in a broad sense, for example, the above terms may refer to a fixed connection, a detachable connection, or integral formation; mechanical or electrical connection; direction connection or indirect connection through an intermediary; or the internal communication of two components or the interaction relationship between two components. Those of ordinary skill in the art can understand the specific meanings of the above terms in the present disclosure in specific situations.

In the present disclosure, unless otherwise clearly specified and limited, a first feature being "on" or "below" a second feature may indicate direct contact between the first and second features, and may also indicate that the first and second features are not in direct contact but are in indirect contact through another feature between them. Moreover, the first feature being "above", "over" and "on" the second feature indicates that the first feature is directly above and obliquely above the second feature, or merely indicates that the first feature is at a level higher than the second feature. The first feature being "below", "beneath" and "under" the second feature indicates that the first feature is directly below and obliquely below the second feature, or simply means that the first feature is at a level lower than the second feature.

In the description of the present disclosure, the orientation or positional relationship of the terms "upper", "lower", "left", "right" is interpreted based on the orientation or positional relationship shown in the accompanying drawings, and are only for the convenience of description and simplification of operation. It does not indicate or imply that the device or element referred to must have a specific orientation, be constructed and operate in a specific orientation, and therefore should not be construed as limitation to the present disclosure. In addition, the terms "first" and "second" are only used for discrimination in description, and have no special meaning.

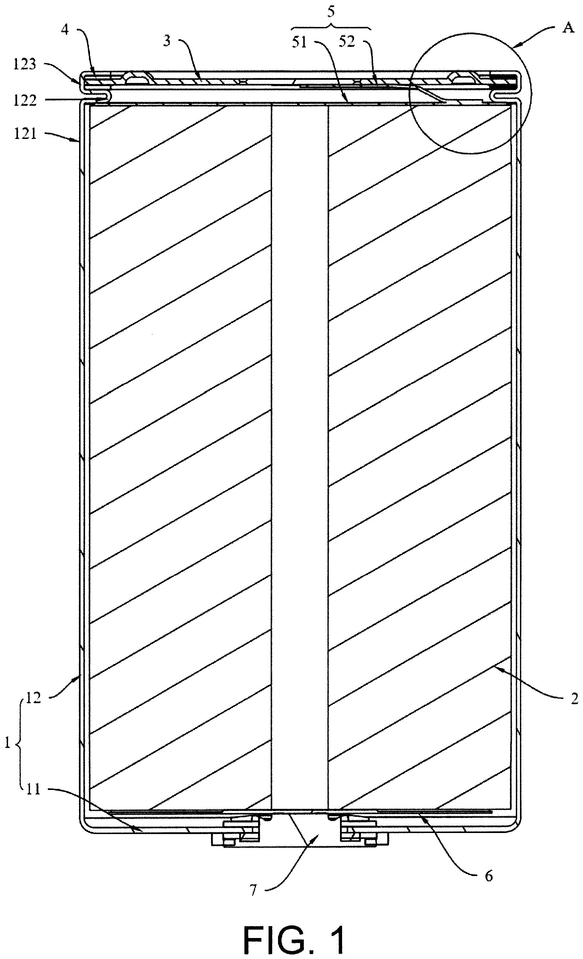

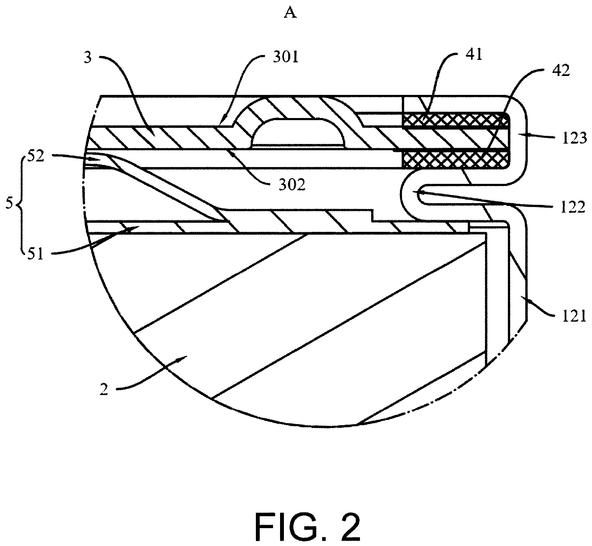

FIG. 1 shows a cross-sectional view of the first type of cylindrical battery provided in the present disclosure. FIG. 2 shows an enlarged view of position A in FIG. 1. As shown in FIG. 1 and FIG. 2, the cylindrical battery includes a housing 1, a cell 2, a cover 3, a sealing member 4, a first connecting piece 5, a second connecting piece 6 and an electrode pole 7. The housing 1 includes an opening, specifically, the housing 1 includes an end wall 11 and a surrounding wall 12, one end of the surrounding wall 12 is connected to the end wall 11, and the other end of the surrounding wall 12 forms the above-mentioned opening. The electrode pole 7 penetrates through the end wall 11 and is connected to the housing 1 in an insulated manner. The cell 2 is arranged in the housing 1, and the cover 3 is fixed on one end of the surrounding wall 12 away from the end wall 11 by adapting to the sealing member 4. The cell 2 includes a cell body, a first tab and a second tab. The first tab is located at one end of the cell body away from the end wall 11 of the housing 1, and the second tab is located at one end of the cell body close to the end wall 11 of the housing 1. The first tab is electrically connected to the cover 3 through the first connecting piece 5, and the second tab is electrically connected to the electrode pole 7 through the second connecting piece 6. The packaging process of the housing 1 and the cover 3 may be as follows: one end of the surrounding wall 12 of the housing 1 away from the end wall 11 is pier-sealed to form a main body portion 121 and a pier-sealed portion 122, then the sealing member 4 covers the peripheral side of the cover 3 to form a cover assembly, and the cover assembly is placed on the pier-sealed portion 122, and finally the surrounding wall 12 of the housing 1 is bent inwardly and fixed on the cover 3 to form the package portion 123, thereby completing packaging of the housing 1.

Further, as shown in FIG. 2, the first connecting piece 5 includes a first connecting portion 51 and a second connecting portion 52 connected to each other. The first connecting portion 51 is electrically connected to the first tab, and the second connecting portion 52 is electrically connected to the cover 3. Optionally, the shape of the first connecting portion 51 is disc-shaped, and one end of the second connecting portion 52 is welded to a peripheral area of the first connecting portion 51 close to the surrounding wall 12, and one end of the second connecting portion 52 is extended to the centre of the first connecting portion 51 and is welded to the cover 3. Of course, in other embodiments, the first connecting piece 5 may also be formed integrally, and formed on the first connecting portion 51 by punching.

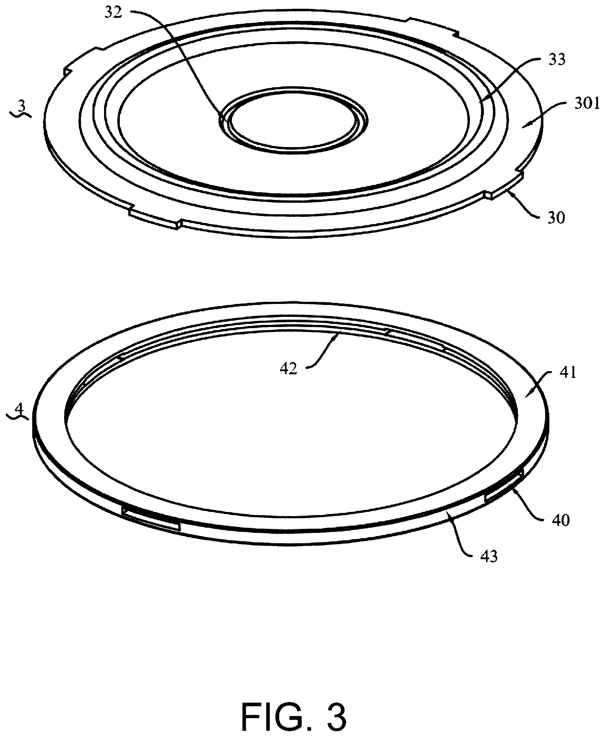

FIG. 3 is an exploded schematic diagram of a cover assembly of the first type of cylindrical battery provided in the present disclosure. As shown in FIG. 3 in conjunction with FIG. 2, the cover 3 is provided with a protruding portion 30, and the sealing member 4 is provided with an avoidance hole 40 for the protruding portion 30 to protrude from. The protruding portion 30 on the cover 3 is able to reach out through the avoidance hole 40 on the sealing member 4 to be in direct contact with the package portion 123 of the surrounding wall 12. In forming the cover assembly, on the one hand, the peripheral side of the cover 3 is wrapped through the sealing member 4, thereby realizing the sealing connection between the cover 3 and the surrounding wall 12 of the housing 1, and leakage of the electrolyte may be avoided; on the other hand, the cover 3 and the first tab are electrically connected, and then the protruding portion 30 of the cover 3 passes through the avoidance hole 40 on the sealing member 4 to be in direct contact with the package portion 123 of the surrounding wall 12, thereby ensuring that the cover 3 is electrically connected to the surrounding wall 12 of the housing 1. In this way, it is possible to ensure the stability of the electrical connection between the cover 3 and the housing 1 without having to weld the cover 3 and the housing 1. Also, the stability and safety of the cylindrical battery may be improved.

As shown in FIG. 3 in conjunction with FIG. 2, the sealing member 4 includes a first wrapping portion 41, a second wrapping portion 42 and a third wrapping portion 43. The first wrapping portion 41 covers the outer surface 301 of the cover 3, the second wrapping portion 42 covers the inner surface 302 of the cover 3, and the third wrapping portion 43 is configured for connecting the first wrapping portion 41 and the second wrapping portion 42. Exemplarily, the section of the sealing member 4 is formed in a C shape. When assembling the cover 3, the sealing member 4 covers the peripheral edge of the cover 3, and then the cover assembly is placed on the pier-sealed portion 122 of the housing 1. In this manner, it is possible to improve the assembly efficiency of the cover 3. In the meantime, since the sealing member 4 covers the edge of the cover 3, when the housing 1 is packaged, the sealing member 4 is not easily detached from the cover 3, thereby ensuring the airtightness effect of the cover 3 and the package portion 123 of the housing 1, and avoiding electrolyte leakage, thus improving the stability and safety of cylindrical batteries.

Further, as shown in FIG. 3, the protruding portion 30 is provided on the peripheral side of the cover 3, and the avoidance hole 40 is provided on the third wrapping portion 43 of the sealing member 4. Four protruding portions 30 are arranged on the peripheral side of the cover 3 at intervals along the circumferential direction of the cover 3. Four avoidance holes 40 are arranged on the third wrapping portion 43 of the sealing member 4 at intervals along the circumferential direction of the sealing member 4. When the sealing member 4 covers the edge of the cover 3, the protruding portion 30 is able to reach out through the avoidance hole 40. In addition, the cooperation of the protruding portion 30 and the avoidance hole 40 makes it possible to position the sealing member 4, thereby avoiding the deformation and dislocation of the sealing member 4 due to the pressing force when the cover 3 is packaged, and ensuring the airtightness effect of the sealing member 4 to avoid electrolyte leakage. Of course, in other embodiments, the number of protruding portions 30 and avoidance holes 40 is not limited to the above examples, and the number of protruding portions 30 and avoidance holes 40 may be set freely according to needs, and related details are not provided here. It should be noted that the greater the number of protruding portions 30, the more stable the electrical connection between the cover 3 and the surrounding wall 12 of the housing 1. However, as the number of avoidance holes 40 increases, the airtightness between the cover 3 and the surrounding wall 12 of the housing 1 is likely to decrease, so the number of the protruding portions 30 and avoidance holes 40 is preferably 3 to 20.

Further, as shown in FIG. 3, a pier-thinning groove 32 is provided on the cover 3. The pier-thinning groove 32 is annular, and the center of the pier-thinning groove 32 coincides with the center of the cover 3. Regarding the setting of the pier-thinning groove 32, in the first aspect, the pier-thinning groove 32 reduces the structural strength of the cover 3 at this position, so that an explosion-proof valve structure may be formed at the pier-thinning groove 32. When thermal imbalance occurs in the cylindrical battery, the pier-thinning groove 32 breaks and releases high-temperature gas to avoid battery explosion. Secondly, the pier-thinning groove 32 is able to reduce the weight of the cover 3, save materials, reduce material costs, and realize lightweight design of cylindrical batteries. The cover 3 is provided with a punching portion 33, the punching portion 33 is annular, the center of the punching portion 33 coincides with the center of the cover 3, and the punching portion 33 protrudes toward the outer surface 301 of the cover 3. The arrangement of the punching portion 33 makes it possible to improve the overall structural strength of the cover 3, and prevent the cover 3 from being deformed by force. Exemplarily, the cover 3 may be formed by punching a steel plate.

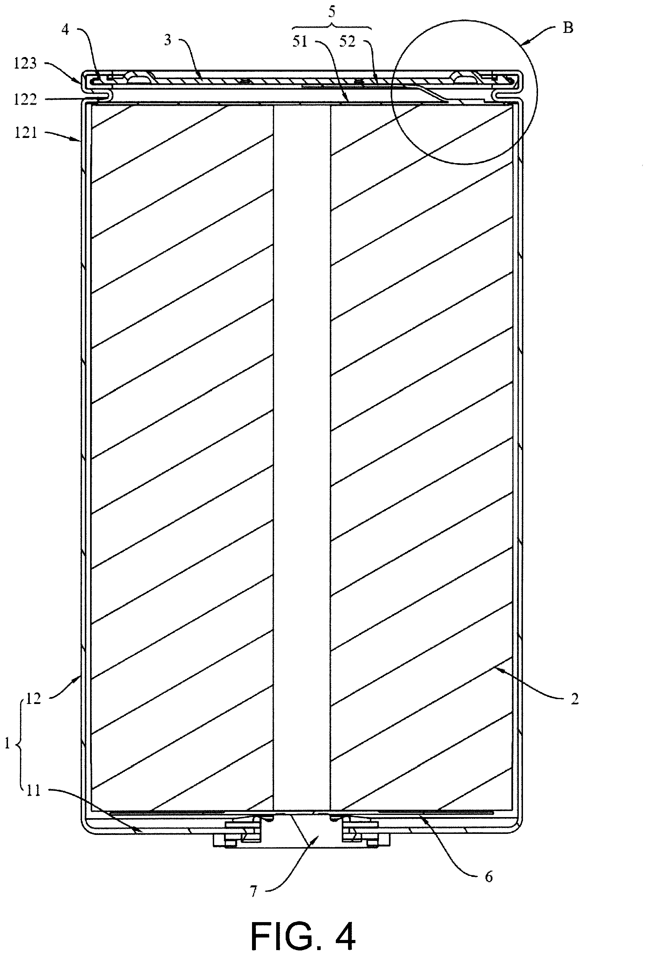

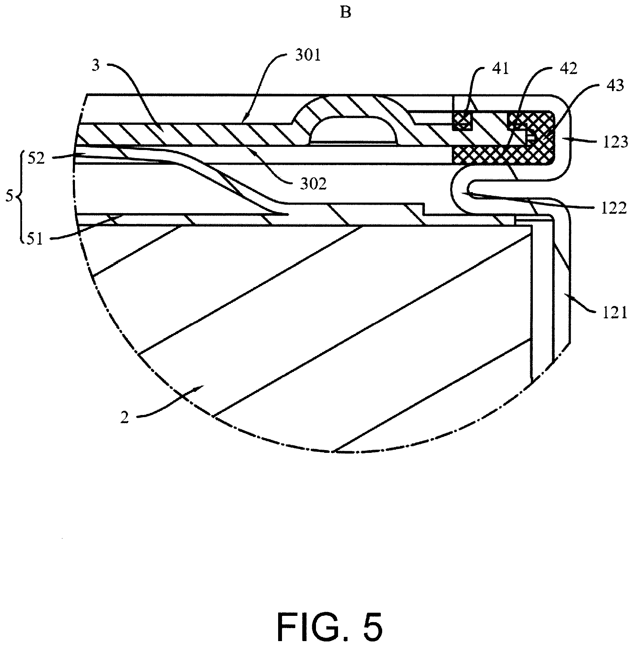

FIG. 4 shows a cross-sectional view of the second type of cylindrical battery provided in the present disclosure. FIG. 5 shows an enlarged view of position B in FIG. 4. As shown in FIG. 5 in conjunction with FIG. 4, the cylindrical battery includes a housing 1, a cell 2, a cover 3, a sealing member 4, a first connecting piece 5, a second connecting piece 6 and an electrode pole 7. The housing 1 includes an opening. Specifically, the housing 1 includes an end wall 11 and a surrounding wall 12, one end of the surrounding wall 12 is connected to the end wall 11, and the other end of the surrounding wall 12 forms the above-mentioned opening. The electrode pole 7 penetrates through the end wall 11 and is connected to the housing 1 in an insulated manner. The cell 2 is arranged in the housing 1, and the cover 3 is fixed on one end of the surrounding wall 12 away from the end wall 11 by adapting to the sealing member 4. The cell 2 includes a cell body, a first tab and a second tab. The first tab is located at one end of the cell body away from the end wall 11 of the housing 1, and the second tab is located at one end of the cell body close to the end wall 11 of the housing 1. The first tab is electrically connected to the cover 3 through the first connecting piece 5, and the second tab is electrically connected to the electrode pole 7 through the second connecting piece 6. The packaging process of the housing 1 and the cover 3 may be as follows: one end of the surrounding wall 12 of the housing 1 away from the end wall 11 is pier-sealed to form a main body portion 121 and a pier-sealed portion 122, then the sealing member 4 covers the peripheral side of the cover 3, and the assembly body of the cover 3 and the sealing member 4 is placed on the pier-sealed portion 122, and finally the surrounding wall 12 of the housing 1 is bent inwardly and fixed on the cover 3 to form the package portion 123, thereby completing packaging of the housing 1.

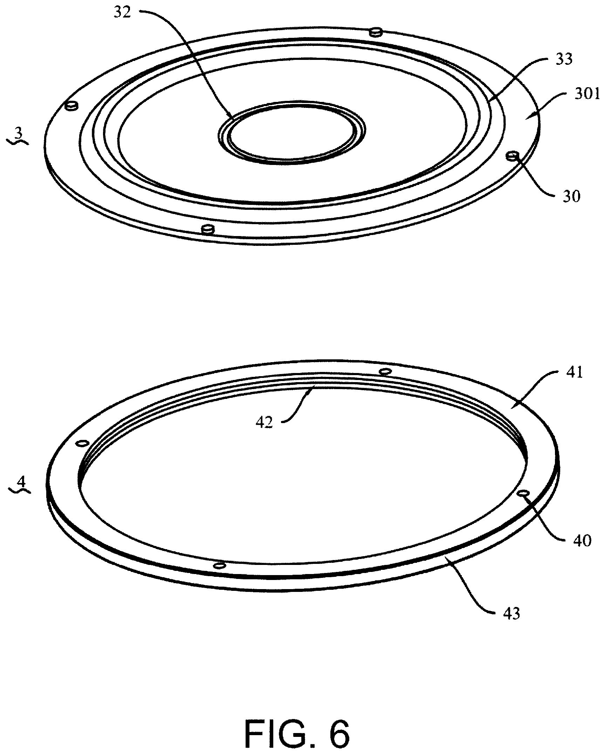

FIG. 6 shows an exploded schematic view of a cover assembly of the second type of cylindrical battery provided in the present disclosure. As shown in FIG. 6 in conjunction with FIG. 5, the cover 3 is provided with a protruding portion 30. The sealing member 4 is provided with an avoidance hole 40 for the protruding portion 30 to protrude from. The protruding portion 30 on the cover 3 is able to reach out through the avoidance hole 40 on the sealing member 4 to be in direct contact with the package portion 123 of the surrounding wall 12. In forming the cover assembly, on the one hand, the peripheral side of the cover 3 is wrapped through the sealing member 4, thereby realizing the sealing connection between the cover 3 and the surrounding wall 12 of the housing 1, and leakage of the electrolyte may be avoided; on the other hand, the cover 3 and the first tab are electrically connected, and then the protruding portion 30 of the cover 3 passes through the avoidance hole 40 on the sealing member 4 to be in direct contact with the package portion 123 of the surrounding wall 12, thereby ensuring that the cover 3 is electrically connected to the surrounding wall 12 of the housing 1. In this way, it is possible to ensure the stability of the electrical connection between the cover 3 and the housing 1 without having to weld the cover 3 and the housing 1. Also, the stability and safety of the cylindrical battery may be improved.

A pier-thinning groove 32 is provided on the cover 3. The pier-thinning groove 32 is annular, and the center of the pier-thinning groove 32 coincides with the center of the cover 3. Regarding the setting of the pier-thinning groove 32, in the first aspect, the pier-thinning groove 32 reduces the structural strength of the cover 3 at this position, so that an explosion-proof valve structure may be formed at the pier-thinning groove 32. When thermal imbalance occurs in the cylindrical battery, the pier-thinning groove 32 breaks and releases high-temperature gas to avoid battery explosion. Secondly, the pier-thinning groove 32 is able to reduce the weight of the cover 3, save materials, reduce material costs, and realize lightweight design of cylindrical batteries. The cover 3 is provided with a punching portion 33, the punching portion 33 is annular, the center of the punching portion 33 coincides with the center of the cover 3, and the punching portion 33 protrudes toward the outer surface 301 of the cover 3. The arrangement of the punching portion 33 makes it possible to improve the overall structural strength of the cover 3, and prevent the cover 3 from being deformed by force. Exemplarily, the cover 3 may be formed by punching a steel plate.

The similarity in the structures of the second type of cylindrical battery and the first type of cylindrical battery will not be repeated here, and the main difference between the two lies in: the cooperation between the sealing member 4 and the cover 3 is different. The details are as follows:

The sealing member 4 includes a first wrapping portion 41, a second wrapping portion 42 and a third wrapping portion 43. The first wrapping portion 41 covers the outer surface 301 of the cover 3, the second wrapping portion 42 covers the inner surface 302 of the cover 3, and the third wrapping portion 43 is configured to connect the first wrapping portion 41 and the second wrapping portion 42. Exemplarily, the section of the sealing member 4 is formed in a C shape. The protruding portion 30 is provided on the outer surface 301 of the cover 3, the avoidance hole 40 is arranged on the first wrapping portion 41 of the sealing member 4, and the protruding portion 30 passes through the avoidance hole 40 and then directly contacts the inner surface of the package portion 123 of the surrounding wall 12.

In FIG. 6, four protruding portions 30 are arranged on the outer surface 301 of the cover 3 at intervals along the circumferential direction of the cover 3. Four avoidance holes 40 are arranged on the first wrapping portion 41 of the sealing member 4 at intervals along the circumferential direction of the sealing member 4. When the sealing member 4 covers the edge of the cover 3, the protruding portion 30 is able to reach out through the avoidance hole 40. In addition, the cooperation of the protruding portion 30 and the avoidance hole 40 makes it possible to position the sealing member 4, thereby avoiding the deformation and dislocation of the sealing member 4 due to the pressing force when the cover 3 is packaged, and ensuring the airtightness effect of the sealing member 4 to avoid electrolyte leakage. Of course, in other embodiments, the number of protruding portions 30 and avoidance holes 40 is not limited to the above examples, and the number of protruding portions 30 and avoidance holes 40 may be set freely according to needs, and related details are not provided here. It should be noted that the greater the number of protruding portions 30, the more stable the electrical connection between the cover 3 and the surrounding wall 12 of the housing 1. However, as the number of avoidance holes 40 increases, the airtightness between the cover 3 and the surrounding wall 12 of the housing 1 is likely to decrease, so the number of the protruding portions 30 and avoidance holes 40 is preferably 3 to 20.

Further, as shown in FIG. 6, the protruding portion 30 is a cylindrical structure, and the avoidance hole 40 is a round through hole. In other embodiments, the protruding portion 30 may also have other shapes, which are not limited here.

Optionally, in other embodiments, a plurality of protruding portions 30 are arranged on the inner surface 302 of the cover 3 at intervals along the circumferential direction of the cover 3, and a plurality of avoidance holes 40 are arranged on the second wrapping portion 42 of the sealing member 4 at intervals along the circumferential direction of the sealing member 4. For the arrangement of the protruding portion 30 and the avoidance hole 40, reference may be made to the arrangement of the second type of cylindrical battery, and details will not be repeated here.

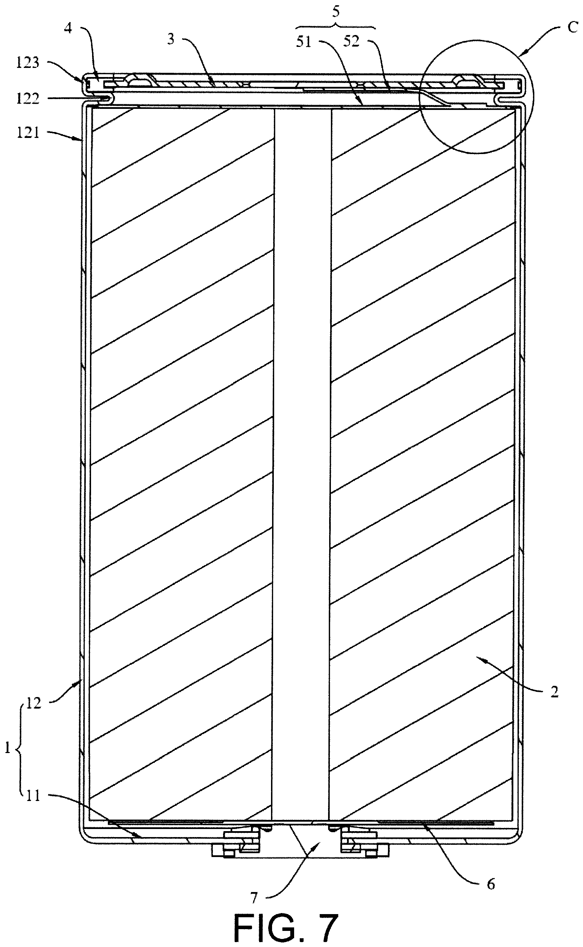

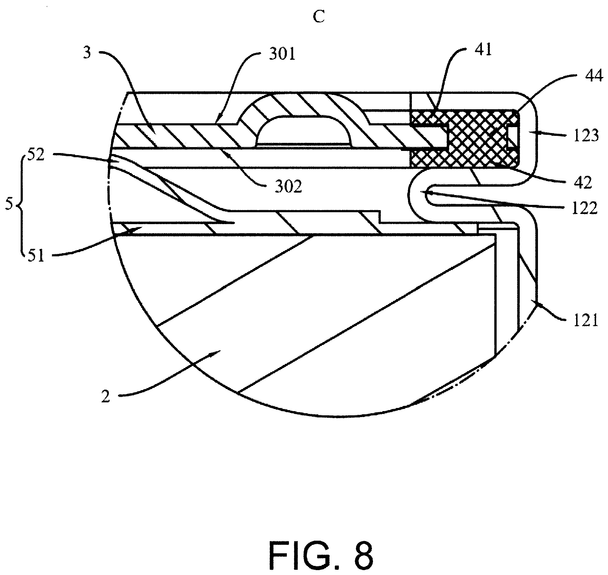

FIG. 7 is a cross-sectional view of the third type of cylindrical battery provided in the present disclosure. FIG. 8 is an enlarged view of position C in FIG. 7. As shown in FIG. 8 combined with FIG. 7, the cylindrical battery includes a housing 1, a cell 2, a cover 3, a sealing member 4, a first connecting piece 5, a second connecting piece 6 and an electrode pole 7. The housing 1 includes an opening, specifically, the housing 1 includes an end wall 11 and a surrounding wall 12, one end of the surrounding wall 12 is connected to the end wall 11, and the other end of the surrounding wall 12 forms the above-mentioned opening. The electrode pole 7 penetrates through the end wall 11 and is connected to the housing 1 in an insulated manner. The cell 2 is arranged in the housing 1, and the cover 3 is fixed on one end of the surrounding wall 12 away from the end wall 11 by adapting to the sealing member 4. The cell 2 includes a cell body, a first tab and a second tab. The first tab is located at one end of the cell body away from the end wall 11 of the housing 1, and the second tab is located at one end of the cell body close to the end wall 11 of the housing 1. The first tab is electrically connected to the cover 3 through the first connecting piece 5, and the second tab is electrically connected to the electrode pole 7 through the second connecting piece 6. The packaging process of the housing 1 and the cover 3 may be as follows: one end of the surrounding wall 12 of the housing 1 away from the end wall 11 is pier-sealed to form a main body portion 121 and a pier-sealed portion 122, then the sealing member 4 covers the peripheral side of the cover 3, and the assembly body of the cover 3 and the sealing member 4 is placed on the pier-sealed portion 122, and finally the surrounding wall 12 of the housing 1 is bent inwardly and fixed on the cover 3 to form the package portion 123, thereby completing packaging of the housing 1.

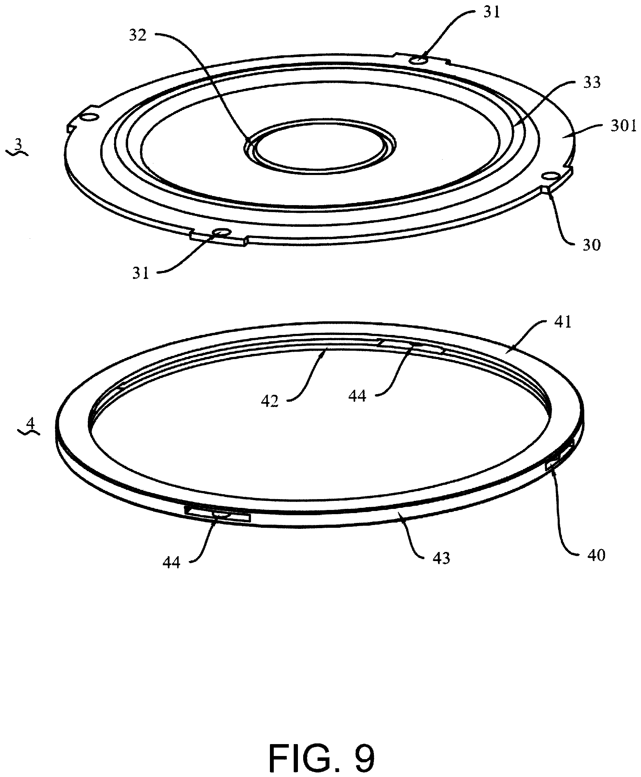

FIG. 9 is an exploded schematic diagram of a cover assembly of the third type of cylindrical battery provided in the present disclosure. As shown in FIG. 9 combined with FIG. 8, the cover 3 is provided with a protruding portion 30, and the sealing member 4 is provided with an avoidance hole 40 for the protruding portion 30 to protrude from. The protruding portion 30 on the cover 3 is able to reach out through the avoidance hole 40 on the sealing member 4 to be in direct contact with the package portion 123 of the surrounding wall 12. In forming the cover assembly, on the one hand, the peripheral side of the cover 3 is wrapped through the sealing member 4, thereby realizing the sealing connection between the cover 3 and the surrounding wall 12 of the housing 1, and leakage of the electrolyte may be avoided; on the other hand, the cover 3 and the first tab are electrically connected, and then the protruding portion 30 of the cover 3 passes through the avoidance hole 40 on the sealing member 4 to be in direct contact with the surrounding wall 12 of the housing 1, thereby ensuring that the cover 3 is electrically connected to the surrounding wall 12 of the housing 1. In this way, it is possible to ensure the stability of the electrical connection between the cover 3 and the housing 1 without having to weld the cover 3 and the housing 1. Also, the stability and safety of the cylindrical battery may be improved.

A pier-thinning groove 32 is provided on the cover 3. The pier-thinning groove 32 is annular, and the center of the pier-thinning groove 32 coincides with the center of the cover 3. Regarding the setting of the pier-thinning groove 32, in the first aspect, the pier-thinning groove 32 reduces the structural strength of the cover 3 at this position, so that an explosion-proof valve structure may be formed at the pier-thinning groove 32. When thermal imbalance occurs in the cylindrical battery, the pier-thinning groove 32 breaks and releases high-temperature gas to avoid battery explosion. Secondly, the pier-thinning groove 32 is able to reduce the weight of the cover 3, save materials, reduce material costs, and realize lightweight design of cylindrical batteries. The cover 3 is provided with a punching portion 33, the punching portion 33 is annular, the center of the punching portion 33 coincides with the center of the cover 3, and the punching portion 33 protrudes toward the outer surface 301 of the cover 3. The arrangement of the punching portion 33 makes it possible to improve the overall structural strength of the cover 3, and prevent the cover 3 from being deformed by force. Exemplarily, the cover 3 may be formed by punching a steel plate.

The arrangement of the protruding portion 30 and avoidance hole 40 in the third type of cylindrical battery is the same as that of the first type of cylindrical battery, and details will not be repeated here. The main difference between the two is that: the way of cooperation between the sealing member 4 and the cover 3 is different. The details are as follows:

The sealing member 4 includes a first wrapping portion 41, a second wrapping portion 42 and a third wrapping portion 43 connected in sequence. The first wrapping portion 41 covers the outer surface 301 of the cover 3, the second wrapping portion 42 covers the inner surface 302 of the cover 3, and the third wrapping portion 43 is configured to connect the first wrapping portion 41 and the second wrapping portion 42. Exemplarily, the section of the sealing member 4 is formed in a C shape. The cover 3 is provided with a positioning hole 31, the sealing member 4 is provided with a positioning pillar 44, and the positioning pillar 44 passes through the positioning hole 31 to further position the cover 3 and the sealing member 4.

Exemplarily, as shown in FIG. 8 and FIG. 9, one end of the positioning pillar 44 is connected to the first wrapping portion 41, and the other end of the positioning pillar 44 is connected to the second wrapping portion 42. In this way, the cover 3 and the sealing member 4 may be integrally formed by injection molding. Specifically, the cover 3 serves as an embedded member, and then the sealing member 4 is integrally formed on the cover 3 by using an injection mold to realize integral molding of the cover 3 and the sealing member 4, thereby improving the assembly efficiency of the cover assembly. Of course, in other embodiments, one end of the positioning pillar 44 is connected to the first wrapping portion 41, and the other end of the positioning pillar 44 is spaced apart from the second wrapping portion 42; or one end of the positioning pillar 44 is connected to the second wrapping portion 42, and the other end of the positioning pillar 44 is spaced apart from the first wrapping portion 41. In this manner, the integration of the cover 3 and the sealing member 4 may also be realized by wrapping the sealing member 4 on the edge of the cover 3 and manually inserting the positioning pillar 44 into the positioning hole 31 of the cover 3.

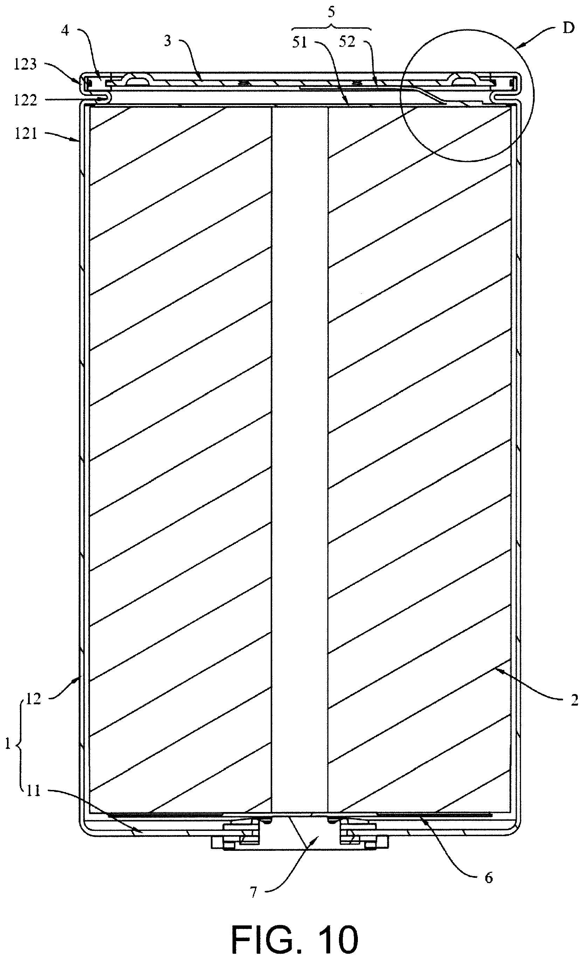

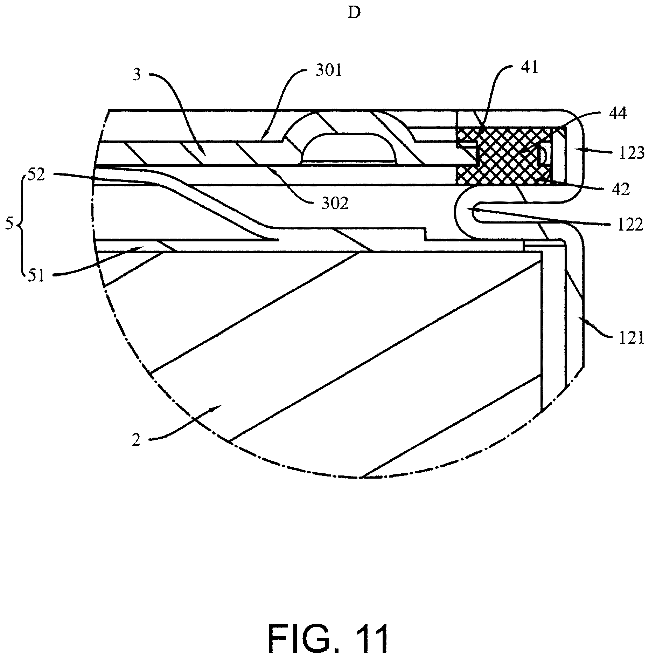

FIG. 10 shows a cross-sectional view of the fourth cylindrical battery provided in the present disclosure. FIG. 11 shows an enlarged view of position D in FIG. 10. As shown in FIG. 11 in combination with FIG. 10, the cylindrical battery includes a housing 1, a cell 2, a cover 3, a sealing member 4, a first connecting piece 5, a second connecting piece 6 and an electrode pole 7. The housing 1 includes an opening, specifically, the housing 1 includes an end wall 11 and a surrounding wall 12, one end of the surrounding wall 12 is connected to the end wall 11, and the other end of the surrounding wall 12 forms the above-mentioned opening. The electrode pole 7 penetrates through the end wall 11 and is connected to the housing 1 in an insulated manner. The cell 2 is arranged in the housing 1, and the cover 3 is fixed on one end of the surrounding wall 12 away from the end wall 11 by adapting to the sealing member 4. The cell 2 includes a cell body, a first tab and a second tab. The first tab is located at one end of the cell body away from the end wall 11 of the housing 1, and the second tab is located at one end of the cell body close to the end wall 11 of the housing 1. The first tab is electrically connected to the cover 3 through the first connecting piece 5, and the second tab is electrically connected to the electrode pole 7 through the second connecting piece 6. The packaging process of the housing 1 and the cover 3 may be as follows: one end of the surrounding wall 12 of the housing 1 away from the end wall 11 is pier-sealed to form a main body portion 121 and a pier-sealed portion 122, then the sealing member 4 covers the peripheral side of the cover 3, and the assembly body of the cover 3 and the sealing member 4 is placed on the pier-sealed portion 122, and finally the surrounding wall 12 of the housing 1 is bent inwardly and fixed on the cover 3 to form the package portion 123, thereby completing packaging of the housing 1.

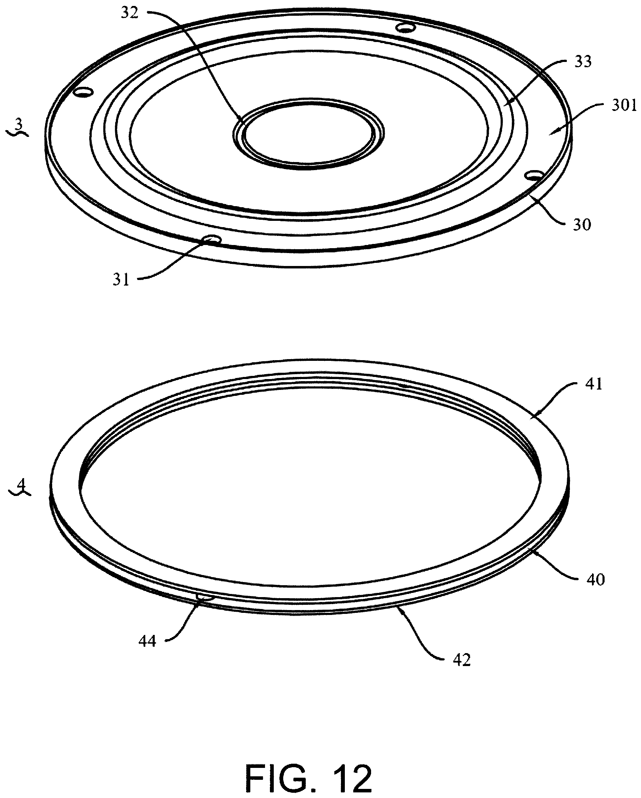

FIG. 12 is an exploded schematic diagram of a cover assembly of the fourth type of cylindrical battery provided in the present disclosure. As shown in FIG. 12 combined with FIG. 11, the cover 3 is provided with a protruding portion 30, and the sealing member 4 is provided with an avoidance hole 40 for the protruding portion 30 to protrude from. The protruding portion 30 on the cover 3 is able to reach out through the avoidance hole 40 on the sealing member 4 to be in direct contact with the package portion 123 of the surrounding wall 12. In forming the cover assembly, on the one hand, the peripheral side of the cover 3 is wrapped through the sealing member 4, thereby realizing the sealing connection between the cover 3 and the surrounding wall 12 of the housing 1, and leakage of the electrolyte may be avoided; on the other hand, the cover 3 and the first tab are electrically connected, and then the protruding portion 30 of the cover 3 passes through the avoidance hole 40 on the sealing member 4 to be in direct contact with the surrounding wall 12 of the housing 1, thereby ensuring that the cover 3 is electrically connected to the surrounding wall 12 of the housing 1. In this way, it is possible to ensure the stability of the electrical connection between the cover 3 and the housing 1 without having to weld the cover 3 and the housing 1. Also, the stability and safety of the cylindrical battery may be improved.

A pier-thinning groove 32 is provided on the cover 3. The pier-thinning groove 32 is annular, and the center of the pier-thinning groove 32 coincides with the center of the cover 3. Regarding the setting of the pier-thinning groove 32, in the first aspect, the pier-thinning groove 32 reduces the structural strength of the cover 3 at this position, so that an explosion-proof valve structure may be formed at the pier-thinning groove 32. When thermal imbalance occurs in the cylindrical battery, the pier-thinning groove 32 breaks and releases high-temperature gas to avoid battery explosion. Secondly, the pier-thinning groove 32 is able to reduce the weight of the cover 3, save materials, reduce material costs, and realize lightweight design of cylindrical batteries. The cover 3 is provided with a punching portion 33, the punching portion 33 is annular, the center of the punching portion 33 coincides with the center of the cover 3, and the punching portion 33 protrudes toward the outer surface 301 of the cover 3. The arrangement of the punching portion 33 makes it possible to improve the overall structural strength of the cover 3, and prevent the cover 3 from being deformed by force. Exemplarily, the cover 3 may be formed by punching a steel plate.

The main difference between the fourth type of cylindrical battery and the third type of cylindrical battery is that the structures of the sealing member 4 and the cover 3 are different. The details are as follows:
The sealing member 4 includes a first wrapping portion 41 and a second wrapping portion 42, the first wrapping portion covers the outer surface 301 of the cover 3, and the second wrapping portion 42 covers the inner surface 302 of the cover 3. The first wrapping portion 41 and the second wrapping portion 42 are substantially parallel to each other. The sealing member 4 further includes a positioning pillar 44, which is configured to connect the first wrapping portion 41 and the second wrapping portion 42 to ensure the integrity of the sealing member 4. The cover 3 and the sealing member 4 are integrally assembled by injection molding. Since the sealing member 4 covers the edge of the cover 3, when the housing 1 is packaged, the sealing member 4 is not easily detached from the cover 3, thereby ensuring the airtightness effect between the cover 3 and the package portion 123 of the housing 1, and avoiding electrolyte leakage, thus improving the stability and safety of cylindrical batteries.

Specifically, in this example, the number of the protruding portion 30 is one, and one protruding portion 30 is disposed around the peripheral side of the cover 3. The gap between the first wrapping portion 41 and the second wrapping portion 42 serves as an avoidance hole 40 for the protruding portion 30 to pass through. The thickness of the protruding portion 30 in the height direction of the battery is greater than that of the cover 3, thereby increasing the contact area between the protruding portion 30 and the package portion 123 of the surrounding wall 12, thus ensuring the stability of the electrical connection.

As shown in FIG. 12 in combination with FIG. 11, the protruding portion 30 is arranged perpendicular to the cover 3, and thus forming an inverted T shape. The first wrapping portion 41 and the second wrapping portion 42 of the sealing member 4 are connected and fixed through the positioning pillar 44, thereby ensuring the overall integrity of the sealing member 4.

In the fourth type of cylindrical battery, the airtightness effect of the sealing member 4 is mainly realized by the first wrapping portion 41 and the second wrapping portion 42 of the sealing member 4. In this example, the contact area between the protruding portion 30 of the cover 3 and the package portion 123 of the housing 1 is the largest, and the contact effect is the most stable, thereby effectively improving the stability of the electrical connection between the cover 3 and the housing 1.

The present disclosure further provides an electronic device, which includes the cylindrical battery. By using the cylindrical battery, the electronic device has high energy density and stable performance, and may improve user experience.

Optionally, the electronic device may be a power battery of a new energy vehicle, a new energy storage device, an electronic product, etc., which will not be described here in details.

Note that in the description of this present disclosure, some expressions such as "some embodiments", "other embodiments" and the like mean that the specific features, structures, materials or characteristics described in conjunction with the embodiments or examples are included in at least one embodiment or example of the disclosure. In this present disclosure, schematic expression of the above terms do not necessarily refer to the same embodiment or example. Furthermore, the particular features, structures, materials or characteristics described may be combined in any suitable manner in any one or more embodiments or examples.

## Claims

1. A cylindrical battery, **characterized by** comprising:
a housing (1), which comprises an opening;
a cell (2), which comprises a cell body and a first tab, wherein the first tab is located at one end of the cell body;
a cover (3), which is electrically connected to the first tab, wherein a protruding portion (30) is provided on the cover (3);
a sealing member (4), which covers an edge of the cover (3), wherein the sealing member (4) is provided with an avoidance hole (40) for the protruding portion (30) to protrude from, and the protruding portion (30) on the cover (3) is able to reach out through the avoidance hole (40) on the sealing member (4) to be in direct contact with the housing (1).

2. The cylindrical battery according to claim 1, **characterized in that** the sealing member (4) comprises a first wrapping portion (41) and a second wrapping portion (42), the first wrapping portion (41) covers an outer surface (301) of the cover (3), and the second wrapping portion (42) covers an inner surface (302) of the cover (3).

3. The cylindrical battery according to claim 2, **characterized in that** a plurality of the protruding portions (30) are arranged on the outer surface (301) of the cover (3) at intervals along a circumferential direction of the cover (3), and a plurality of the avoidance holes (40) are arranged on the first wrapping portion (41) of the sealing member (4) at intervals along a circumferential direction of the sealing member (4); or
the plurality of protruding portions (30) are arranged on the inner surface (302) of the cover (3) at intervals along the circumferential direction of the cover (3), and the plurality of avoidance holes (40) are arranged on the second wrapping portion (42) of the sealing member (4) at intervals along the circumferential direction of the sealing member (4).

4. The cylindrical battery according to claim 2, **characterized in that** a positioning pillar (44) is provided on the sealing member (4), and a positioning hole (31) through which the positioning pillar (44) passes is provided on the cover (3).

5. The cylindrical battery according to claim 4, **characterized in that** the sealing member (4) further comprises a third wrapping portion (43), and the third wrapping portion (43) is configured to connect the first wrapping portion (41) and the second wrapping portion (42).

6. The cylindrical battery according to claim 5, **characterized in that** the protruding portion (30) is provided on a peripheral side of the cover (3), and the avoidance hole (40) is provided on the third wrapping portion (43) of the sealing member (4).

7. The cylindrical battery according to claim 6, **characterized in that** a plurality of the protruding portions (30) are arranged on the peripheral side of the cover (3) at intervals along a circumferential direction of the cover (3), and a plurality of the avoidance holes (40) are arranged on the third wrapping portion (43) of the sealing member (4) at intervals along a circumferential direction of the sealing member (4).

8. The cylindrical battery according to any one of claims 5-7, **characterized in that** one end of the positioning pillar (44) is connected to the first wrapping portion (41), and another end of the positioning pillar (44) is spaced apart from the second wrapping portion (42); or
one end of the positioning pillar (44) is connected to the second wrapping portion (42), and another end of the positioning pillar (44) is spaced apart from the first wrapping portion (41).

9. The cylindrical battery according to claim 4, **characterized in that** the first wrapping portion (41) and the second wrapping portion (42) are arranged at intervals, and a gap between the first wrapping portion (41) and the second wrapping portion (42) serves as the avoidance hole (40), two ends of the positioning pillar (44) are respectively connected to the first wrapping portion (41) and the second wrapping portion (42), one of the protruding portions (30) encloses an outer peripheral side of the cover (3), and the protruding portion (30) passes through the avoidance hole (40).

10. The cylindrical battery according to claim 9, **characterized in that** a thickness of the protruding portion (30) is greater than a thickness of the cover (3).

11. An electronic device, **characterized by** comprising the cylindrical battery according to any one of claims 1-10.

## Patentansprüche

1. Zylindrische Batterie, **dadurch gekennzeichnet, dass** sie umfasst:
ein Gehäuse (1), das eine Öffnung umfasst;
eine Zelle (2), die einen Zellenkörper und eine erste Lasche umfasst, wobei sich die erste Lasche an einem Ende des Zellenkörpers befindet;
eine Abdeckung (3), die elektrisch mit der ersten Lasche verbunden ist, wobei ein vorstehender Abschnitt (30) an der Abdeckung (3) bereitgestellt wird;
ein Dichtungselement (4), das eine Kante der Abdeckung (3) abdeckt, wobei das Dichtungselement (4) mit einem Ausweichloch (40) bereitgestellt wird, aus dem der vorstehende Abschnitt (30) herausragen kann, und der vorstehende Abschnitt (30) auf der Abdeckung (3) durch das Ausweichloch (40) auf dem Dichtungselement (4) herausreichen kann, um in direktem Kontakt mit dem Gehäuse (1) zu stehen.

2. Zylindrische Batterie gemäß Anspruch 1, **dadurch gekennzeichnet, dass** das Dichtungselement (4) einen ersten Wicklungsabschnitt (41) und einen zweiten Wicklungsabschnitt (42) umfasst, wobei der erste Wicklungsabschnitt (41) eine Außenfläche (301) der Abdeckung (3) bedeckt und der zweite Wicklungsabschnitt (42) eine Innenfläche (302) der Abdeckung (3) bedeckt.

3. Zylindrische Batterie gemäß Anspruch 2, **dadurch gekennzeichnet, dass** eine Vielzahl der vorstehenden Abschnitte (30) auf der Außenfläche (301) der Abdeckung (3) in Abständen entlang einer Umfangsrichtung der Abdeckung (3) angeordnet sind und eine Vielzahl der Ausweichlöcher (40) auf dem ersten Wicklungsabschnitt (41) des Dichtungselements (4) in Abständen entlang einer Umfangsrichtung des Dichtungselements (4) angeordnet sind; oder
die Vielzahl von vorstehenden Abschnitten (30) auf der Innenfläche (302) der Abdeckung (3) in Abständen entlang der Umfangsrichtung der Abdeckung (3) angeordnet sind und die Vielzahl der Ausweichlöcher (40) auf dem zweiten Wicklungsabschnitt (42) des Dichtungselements (4) in Abständen entlang der Umfangsrichtung des Dichtungselements (4) angeordnet sind.

4. Zylindrische Batterie gemäß Anspruch 2, **dadurch gekennzeichnet, dass** eine Positioniersäule (44) auf dem Dichtungselement (4) bereitgestellt ist und ein Positionierloch (31), durch das die Positioniersäule (44) hindurchgeht, auf der Abdeckung (3) bereitgestellt ist.

5. Zylindrische Batterie gemäß Anspruch 4, **dadurch gekennzeichnet, dass** das Dichtungselement (4) ferner einen dritten Wicklungsabschnitt (43) umfasst und der dritte Wicklungsabschnitt (43) so konfiguriert ist, dass er den ersten Wicklungsabschnitt (41) und den zweiten Wicklungsabschnitt (42) verbindet.

6. Zylindrische Batterie gemäß Anspruch 5, **dadurch gekennzeichnet, dass** der vorstehende Abschnitt (30) an einer Umfangsseite der Abdeckung (3) bereitgestellt ist und das Ausweichloch (40) an dem dritten Wicklungsabschnitt (43) des Dichtungselements (4) bereitgestellt ist.

7. Zylindrische Batterie gemäß Anspruch 6, **dadurch gekennzeichnet, dass** eine Vielzahl der vorstehenden Abschnitte (30) an der Umfangsseite der Abdeckung (3) in Abständen entlang einer Umfangsrichtung der Abdeckung (3) angeordnet sind und eine Vielzahl der Ausweichlöcher (40) an dem dritten Wicklungsabschnitt (43) des Dichtungselements (4) in Abständen entlang einer Umfangsrichtung des Dichtungselements (4) angeordnet sind.

8. Zylindrische Batterie gemäß einem der Ansprüche 5 bis 7, **dadurch gekennzeichnet, dass** ein Ende des Positionierungsstifts (44) mit dem ersten Wicklungsabschnitt (41) verbunden ist und ein anderes Ende des Positionierungsstifts (44) von dem zweiten Wicklungsabschnitt (42) beabstandet ist; oder
ein Ende des Positionierstifts (44) mit dem zweiten Wicklungsabschnitt (42) verbunden ist und ein anderes Ende der Positioniersäule (44) von dem ersten Wicklungsabschnitt (41) beabstandet ist.

9. Zylindrische Batterie gemäß Anspruch 4, **dadurch gekennzeichnet, dass** der erste Wicklungsabschnitt (41) und der zweite Wicklungsabschnitt (42) in Abständen angeordnet sind und ein Spalt zwischen dem ersten Wicklungsabschnitt (41) und dem zweiten Wicklungsabschnitt (42) als Ausweichloch (40) dient, zwei Enden der Positioniersäule (44) jeweils mit dem ersten Wicklungsabschnitt (41) und dem zweiten Wicklungsabschnitt (42) verbunden sind, einer der vorstehenden Abschnitte (30) eine äußere Umfangsseite der Abdeckung (3) umschließt und der vorstehende Abschnitt (30) durch das Ausweichloch (40) hindurchgeht.

10. Zylindrische Batterie gemäß Anspruch 9, **dadurch gekennzeichnet, dass** eine Dicke des vorstehenden Abschnitts (30) größer ist als eine Dicke der Abdeckung (3).

11. Elektronisches Gerät, **dadurch gekennzeichnet, dass** es die zylindrische Batterie gemäß einem der Ansprüche 1 bis 10 umfasst.

## Revendications

1. Batterie cylindrique, **caractérisée en ce qu'**elle comprend :
un boîtier (1), qui comporte une ouverture ;
une cellule (2), qui comporte un corps de cellule et une première languette, dans lequel la première languette est située à une extrémité du corps de cellule ;
un couvercle (3), qui est connecté électriquement à la première languette, dans lequel une partie protubérante (30) est prévue sur le couvercle (3) ;
un élément d'étanchéité (4), qui recouvre un bord du couvercle (3), dans lequel l'élément d'étanchéité (4) est pourvu d'un trou d'évitement (40) permettant à la partie protubérante (30) de dépasser de, et la partie protubérante (30) du couvercle (3) pouvant passer par le trou d'évitement (40) de l'élément d'étanchéité (4) pour être en contact direct avec le boîtier (1).

2. Batterie cylindrique selon la revendication 1, **caractérisée en ce que** l'élément d'étanchéité (4) comprend une première partie d'enveloppement (41) et une deuxième partie d'enveloppement (42), la première partie d'enveloppement (41) recouvrant une surface extérieure (301) du couvercle (3) et la deuxième partie d'enveloppement (42) recouvrant une surface intérieure (302) du couvercle (3).

3. Batterie cylindrique selon la revendication 2, **caractérisée en ce qu'**une pluralité de parties protubérantes (30) sont disposées sur la surface extérieure (301) du couvercle (3) à intervalles réguliers le long de la circonférence du couvercle (3) et une pluralité de trous d'évitement (40) sont disposés sur la première partie d'enveloppement (41) de l'élément d'étanchéité (4) à intervalles réguliers le long de la circonférence de cet élément d'étanchéité (4) ; ou
la pluralité de parties protubérantes (30) sont disposées sur la surface intérieure (302) du couvercle (3) à intervalles réguliers le long de la circonférence de ce dernier et la pluralité de trous d'évitement (40) sont disposés sur la deuxième partie d'enveloppement (42) de l'élément d'étanchéité (4) à intervalles réguliers le long de la circonférence de cet élément d'étanchéité (4).

4. Batterie cylindrique selon la revendication 2, **caractérisée en ce qu'**un pilier de positionnement (44) est prévu sur l'élément d'étanchéité (4) et un trou de positionnement (31) traversé par le pilier de positionnement (44) est prévu sur le couvercle (3).

5. Batterie cylindrique selon la revendication 4, **caractérisée en ce que** l'élément d'étanchéité (4) comprend en outre une troisième partie d'enveloppement (43) et la troisième partie d'enveloppement (43) est configurée pour raccorder la première partie d'enveloppement (41) et la deuxième partie d'enveloppement (42).

6. Batterie cylindrique selon la revendication 5, **caractérisée en ce que** la partie protubérante (30) est prévue sur un côté périphérique du couvercle (3), et le trou d'évitement (40) est prévu sur la troisième partie d'enveloppement (43) de l'élément d'étanchéité (4).

7. Batterie cylindrique selon la revendication 6, **caractérisée en ce qu'**une pluralité de parties protubérantes (30) sont disposées sur le côté périphérique du couvercle (3) à intervalles réguliers le long de la circonférence du couvercle (3) et plusieurs trous d'évitement (40) sont disposés sur la troisième partie d'enveloppement (43) de l'élément d'étanchéité (4) à intervalles réguliers le long de la circonférence de l'élément d'étanchéité (4).

8. Batterie cylindrique selon une quelconque des revendications 5 à 7, **caractérisée en ce qu'**une extrémité du pilier de positionnement (44) est raccordée à la première partie d'enveloppement (41) et une autre extrémité du pilier de positionnement (44) est espacée de la deuxième partie d'enveloppement (42) ; ou
une extrémité du pilier de positionnement (44) est reliée à la deuxième partie d'enveloppement (42), et une autre extrémité du pilier de positionnement (44) est espacée de la première partie d'enveloppement (41).

9. Batterie cylindrique selon la revendication 4, **caractérisée en ce que** la première partie d'enveloppement (41) et la deuxième partie d'enveloppement (42) sont disposées à intervalles réguliers et un interstice entre la première partie d'enveloppement (41) et la deuxième partie d'enveloppement (42) sert de trou d'évitement (40), deux extrémités du pilier de positionnement (44) sont respectivement raccordées à la première partie d'enveloppement (41) et à la deuxième partie d'enveloppement (42), une des parties protubérantes (30) entoure un côté périphérique extérieur du couvercle (3) et la partie protubérante (30) traverse le trou d'évitement (40).

10. Batterie cylindrique selon la revendication 9, **caractérisée en ce qu'**une épaisseur de la partie protubérante (30) est supérieure à l'épaisseur du couvercle (3).

11. Dispositif électronique, **caractérisé en ce qu'**il comprend la batterie cylindrique selon une quelconque des revendications 1 à 10.
